# EUROPEAN PATENT APPLICATION

(11) **EP 4 468 644 A2**
(43) Date of publication of application: **27.11.2024**
(21) Application number: 24190784.9
(22) Date of filing: 04.07.2019
(51) Int. Cl.: H04L 5/00

(54) **DEVICE AND METHOD FOR A WIRELESS NETWORK**

(62) Divisional of application: 19935807.8
(71) Applicant: Huawei Technologies Co., Ltd., Shenzhen, Guangdong 518129 (CN)
(72) Inventor: TSODIK, Genadiy, 80992 Munich (DE); SHILO, Shimon, 80992 Munich (DE); HENCINSKI, Oren, 80992 Munich (DE); REDLICH, Oded, 80992 Munich (DE); EZRI, Doron, 80992 Munich (DE); LI, Yunbo, Shenzhen, 518129 (CN)
(74) Representative: Roth, Sebastian

(57) **Abstract**

The present invention provides a device for a wireless network comprising a single primary channel having a first predefined bandwidth configured as a common channel of operation for one or more devices associated with a specific access point, and a plurality of secondary channels having a second predefined bandwidth within the first predefined bandwidth. The device is configured to execute a first Carrier-Sense Multiple Access with Collision Avoidance, CSMA/CA, instance associated with the primary channel to gain access to the primary channel, wherein a first back-off is generated; and execute a second CSMA/CA instance associated with one of the secondary channels to gain access to the secondary channel, wherein a second back-off is generated.

## Description

### TECHNICAL FIELD

The present disclosure relates generally to the field of wireless communication, and, more particularly, to accessing a channel in a wireless communication network. To this end, a device and a method performed by the device is disclosed, for a wireless network including a single primary channel and a plurality of secondary channels. The single primary channel having a first predefined bandwidth is configured as a common channel of operation for one or more devices associated with a specific access point, and the plurality of the secondary channels having a second predefined bandwidth within the first predefined bandwidth.

### BACKGROUND

Generally, more and more applications that are using the wireless channels require high throughput and ultra-low latency. For example, Virtual Reality (VR) gaming requires typically 20msec as a maximum acceptable delay for high-quality user experience. In addition, Wi-Fi communication technology is not optimized for low latency, thus, both delay and delay jitter can be very large. Conventionally, in many cases, the experienced delays are much longer than the 20msec requirement mentioned above.

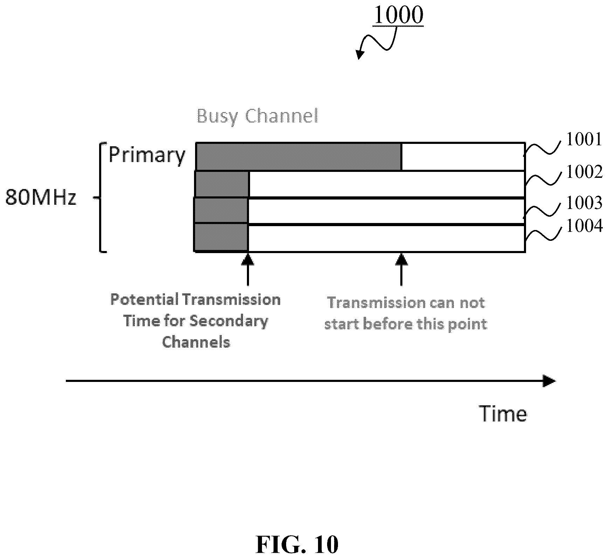

In addition, most of the conventional Wi-Fi devices use no scheduling protocols for channel access. The channel access is based on Carrier-Sense Multiple Access with Collision Avoidance (CSMA/CA) method, which may result in a long time period when the device is waiting for resources to be idle. FIG. 10 schematically illustrates the channel access problem in WiFi for a conventional access method. The conventional channel access method 1000 defines that a device can transmit only when the primary channel 1001 is idle. This means that, regardless of the status of the rest of the Bandwidth (BW) 1002, 1003, 1004, the availability of the primary channel 1001 defines the probability to access the channel and transmit.

Furthermore, WiFi is a Test Driven Development (TDD) technology with no prescheduling algorithms. It means that only one device can transmit at a specific time slot and the decision regarding the transmission is done, immediately and before its start. In other words, there is no method that can promise successful channel access for a specific device at a specific time. This problem cannot be resolved due to backward compatibility that is mandatory in WiFi standards. Thus, if the device from the same network occupies the primary channel, there is no opportunity to transmit.

Moreover, the last version of the WiFi standard defined a spatial reuse method which allows the neighbor networks to carry out parallel transmissions using the same frequency resources if they do not interfere each other. However, this technique limits the power of the transmitted signal and also has several constraints that were introduced to preserve robustness. Thus, this conventional method is not optimized for latency reduction and cannot provide the desired efficiency for channel access.

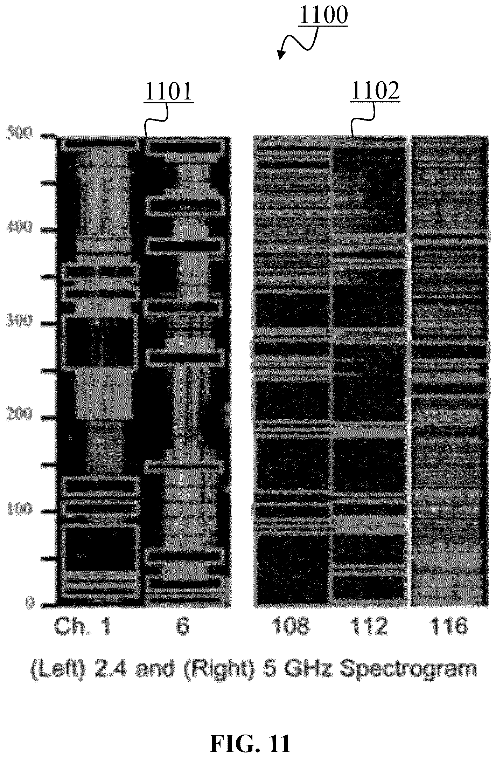

In addition, another method that was already discussed as a candidate for channel access efficiency improvement is managing multiple primary channels where each channel can have its own BW or BWs related to different primary channels can overlap. This idea is based on an empirical statistic which shows that in most of the time periods there are free (idle) channels over the WiFi band (see the spectrogram for 2.4 GHz 1101 and the spectrogram for 5 GHz 1102 in FIG. 11). FIG. 11 schematically illustrates channel status in WiFi bands for a conventional method 1100. Although this method can bring gain in latency reduction it has two main issues: implementation complexity is relatively high (multiple receive chains are required) and the status of each primary channel defines the channel access for the entire BW.

The conventional devices and methods have the disadvantages that they are either limited in their efficiency or require high additional complexity. Moreover, when the primary channel based rules are preserved, an available BW cannot be used, if the primary channel is busy.

### SUMMARY

In view of the above-mentioned problems and disadvantages, the present invention aims to improve the conventional devices and methods. The present invention has thereby the objective to provide a device, a system and a method for a wireless network. The present invention focuses on channel access efficiency for a single primary channel and provides a technique that can lead to latency reduction, and also, can be easily combined with other methods such as the multiple primary channels technique.

The objective of the present invention is achieved by the solution provided in the enclosed independent claims. Advantageous implementations of the present invention are further defined in the dependent claims.

The main advantages of the embodiments of the invention can be summarized as follows:
- Allowing efficient usage of the frequency resources and thus, decreasing the latency
- Preserving the existing channel access procedures, and thus, no new algorithms and hardware design may be necessary.
- The devices that do not support the proposed method may operate in the same manner with no change or degradation in their performance (for example, the method and/or the device of the present invention may not change the performance of other devices).
- Preserving the fairness as much as possible and minimizing the undesired network issues.

A first aspect of the invention provides a device for a wireless network comprising a single primary channel having a first predefined bandwidth configured as a common channel of operation for one or more devices associated with a specific access point, and a plurality of secondary channels having a second predefined bandwidth within the first predefined bandwidth, wherein the device is configured to execute a first Carrier-Sense Multiple Access with Collision Avoidance, CSMA/CA, instance associated with the primary channel to gain access to the primary channel, wherein a first back-off is generated; and execute a second CSMA/CA instance associated with one of the secondary channels to gain access to the secondary channel, wherein a second back-off is generated.

The device of the first aspect may address an issue related to the latency problem. In particular, the device of the first aspect may significantly reduce average delay and jitter in a Wi-Fi network for specific stations (STAs).

Moreover, the single primary channel may be configured as the common channel of operation such that it is the only channel that is known for all the one or more devices associated with the specific Access Point (AP).

The device may comprise a circuitry. The circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

In an implementation form of the first aspect, the device is further configured to execute a plurality of second CSMA/CA instances, each CSMA/CA instance being associated with a different secondary channel and a different maximum bandwidth.

In a further implementation form of the first aspect, the second back-off is decreased only when the secondary channel is free and the primary channel is occupied by another device.

In a further implementation form of the first aspect, is further configured to, if any back-off reaches zero, transmit data on the bandwidth defined for a determined channel, for which the back-off was generated.

In a further implementation form of the first aspect, the device is further configured to, if the primary channel is occupied by the other device and the second back-off reaches zero, transmit data on the secondary channel.

For example, the transmitted data may be any type of data. In some embodiments, the transmitted data may be, in particular, latency sensitive data.

In a further implementation form of the first aspect, the device is further configured to, if the primary channel become IDLE, refrain execution of at least one operation being currently performed.

In particular, the device may refrain an action, e.g., as soon as the primary channel is IDLE.

In a further implementation form of the first aspect, the device is further configured to, if the primary channel is occupied by another device being associated with another access point, determine the duration of a transmission by the other device on the primary channel.

In a further implementation form of the first aspect, the device is further configured to adjust total duration of all transmissions on the secondary channel to be shorter than or equal to the duration of the transmission by the other device on the primary channel.

In particular, the total duration of all transmissions (even if multiple packets are transmitted) should be adjusted.

In a further implementation form of the first aspect, the device is further configured to, when ending a transmission on the secondary channel, wait for a determined time interval, before accessing the primary channel.

In a further implementation form of the first aspect, the device is further configured to, if a duration of a transmission by the other device on the primary channel is smaller than a predefined threshold, do not resolve back-off counting for the secondary channel.

In particular, the device may stay operating on the primary channel.

In a further implementation form of the first aspect, the device is further configured to include a Network Allocation Vector, NAV, value to a data packet transmitted on the secondary channel, wherein the NAV value is smaller than or equal to duration of a single data packet.

For example, in some embodiments, the NAV period may be a time period set by the device to prevent other devices to transmit during this period. The NAV value may be announced within the data packet.

Moreover, in some embodiments, the NAV announcement may be missed or it may not be received due to operation on the secondary channel. Thus, in order to prevent these issues the following two main rules may be applied:
1. Duration threshold: if a packet that occupies the primary channel is too short, the device should refrain from switching to a secondary channel. This threshold may be agreed within the wireless network in order to make sure every device takes the same decisions. The threshold period may be denoted as T_{SWITCH}.
2. The NAV setting on the secondary channel: in order to prevent any issue related to NAV setting on the secondary channels, the NAV value may be restricted on the secondary channel to be smaller than or equal to the duration of the single packet.

In a further implementation form of the first aspect, the device is further configured to transmit control information and/or management information, using only the primary channel.

A second aspect of the invention provides a system comprising; a first device according to the first aspect or one of the implementation form of the first aspect; and a second device according to the second aspect or one of the implementation form of the second aspect.

A third aspect of the invention provides a method performed by a device for a wireless network comprising a single primary channel having a first predefined bandwidth configured as a common channel of operation for one or more devices associated with a specific access point, and a plurality of secondary channels having a second predefined bandwidth within the first predefined bandwidth, wherein the method comprises executing a first Carrier-Sense Multiple Access with Collision Avoidance, CSMA/CA, instance associated with the primary channel to gain access to the primary channel, wherein a first back-off is generated; and executing a second CSMA/CA instance associated with one of the secondary channels to gain access to the secondary channel, wherein a second back-off is generated. In an implementation form of the third aspect, the method further comprises executing a plurality of second CSMA/CA instances, each CSMA/CA instance being associated with a different secondary channel and a different maximum bandwidth.

In a further implementation form of the third aspect, the second back-off is decreased only when the secondary channel is free and the primary channel is occupied by another device.

In a further implementation form of the third aspect, the method further comprises, if any back-off reaches zero, transmitting data on the bandwidth defined for a determined channel, for which the back-off was generated.

In a further implementation form of the third aspect, the method further comprises, if the primary channel is occupied by the other device and the second back-off reaches zero, transmitting data on the secondary channel.

In a further implementation form of the third aspect, the method further comprises, if the primary channel become IDLE, refraining execution of at least one operation being currently performed.

In a further implementation form of the third aspect, the method further comprises, if the primary channel is occupied by another device being associated with another access point, determining the duration of a transmission by the other device on the primary channel.

In a further implementation form of the third aspect, the method further comprises adjusting total duration of all transmissions on the secondary channel to be shorter than or equal to the duration of the transmission by the other device on the primary channel.

In a further implementation form of the third aspect, the method further comprises when ending a transmission on the secondary channel, waiting for a determined time interval, before accessing the primary channel.

In a further implementation form of the third aspect, the method further comprises, if a duration of a transmission by the other device on the primary channel is smaller than a predefined threshold, do not resolving back-off counting for the secondary channel.

In a further implementation form of the third aspect, the method further comprises including a Network Allocation Vector, NAV, value to a data packet transmitted on the secondary channel, wherein the NAV value is smaller than or equal to duration of a single data packet.

In a further implementation form of the third aspect, the method further comprises transmitting control information and/or management information, using only the primary channel.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present invention will be explained in the following description of specific embodiments in relation to the enclosed drawings, in which
- FIG. 1: is a schematic view of a device for a wireless network, according to an embodiment of the present invention;
- FIG. 2: is a schematic view of a system, according to an embodiment of the present invention;
- FIG. 3: is another exemplary scheme of the device supporting latency sensitive transmission, according to an embodiment of the present invention;
- FIG. 4: is another schematic view of the single primary channel having a first predefined bandwidth and the plurality of secondary channels having a second predefined bandwidth within the first predefined bandwidth;
- FIG. 5: is a schematic view of back-off counting rules;
- FIG. 6: is a schematic view of executing two CSMA/CA instances by the device when having three different phases of operation;
- FIG. 7: is a schematic view of adjusting the duration time;
- FIG. 8: is a schematic view of applying a waiting period after transmission on the secondary channel;
- FIG. 9: is a flowchart of a method performed by a device for a wireless network, according to an embodiment of the invention;
- FIG. 10: schematically illustrates the channel access problem in WiFi for a conventional access method;
- FIG. 11: schematically illustrates channel status in WiFi bands for a conventional method.

### DETAILED DESCRIPTION OF EMBODIMENTS

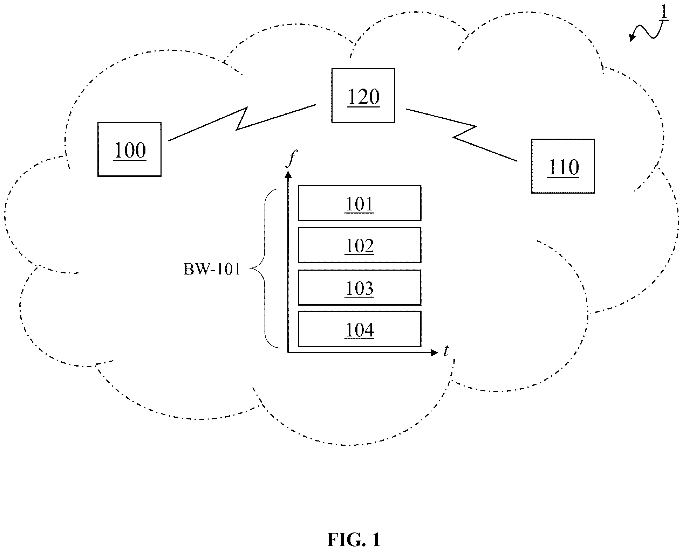

FIG. 1 is a schematic view of a device 100 for a wireless network 1 comprising a single primary channel 101 having a first predefined bandwidth BW-101 configured as a common channel of operation for one or more devices 100, 110 associated with a specific access point 120, and a plurality of secondary channels 102, 103, 104 having a second predefined bandwidth within the first predefined bandwidth BW-101, according to an embodiment of the present invention.

The device 100 is configured to execute a first Carrier-Sense Multiple Access with Collision Avoidance, CSMA/CA, instance associated with the primary channel 101 to gain access to the primary channel 101, wherein a first back-off is generated.

The device 100 is further configured to execute a second CSMA/CA instance associated with one of the secondary channels 102, 103, 104 to gain access to the secondary channel 102, 103, 104, wherein a second back-off is generated.

The device 100 may comprise a circuitry (not shown in FIG. 1), the circuitry may comprise hardware and software. The hardware may comprise analog or digital circuitry, or both analog and digital circuitry. In some embodiments, the circuitry comprises one or more processors and a non-volatile memory connected to the one or more processors. The non-volatile memory may carry executable program code which, when executed by the one or more processors, causes the device to perform the operations or methods described herein.

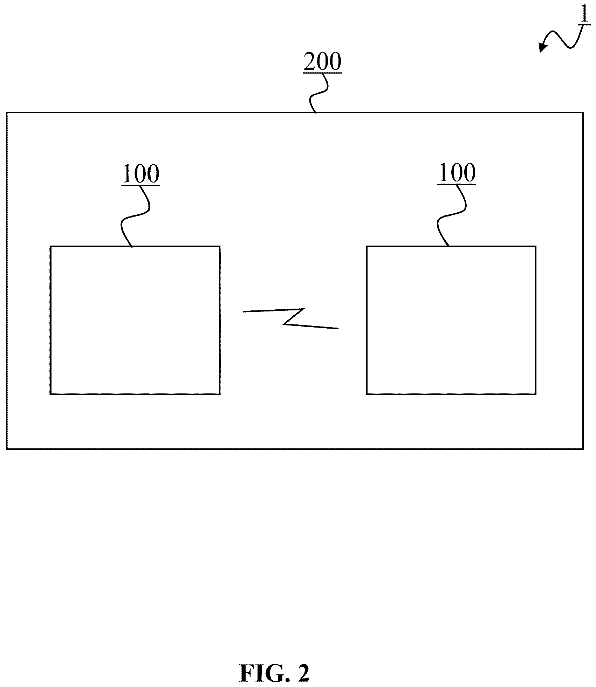

Reference is made to FIG. 2 which is a schematic view of a system, according to an embodiment of the present invention.

Without limiting the present disclosure, it is assumed that the device 100 of the FIG. 1 is incorporated in the system 200 (e.g., as the first device and/or the second device). The system 200 comprises a first device 100. The system 200 further comprises a second device 100.

The system 200 may be for the wireless network 1 comprising the single primary channel 101 having the first predefined bandwidth BW-101 configured as a common channel of operation (e.g., for the first device 100 and the second device 100 of the system 200), and a plurality of secondary channels 102, 103, 104 having a second predefined bandwidth within the first predefined bandwidth BW-101.

The first device 100 and/or the second device 100 of the system 200 may execute a first Carrier-Sense Multiple Access with Collision Avoidance, CSMA/CA, instance associated with the primary channel 101 to gain access to the primary channel 101, wherein a first back-off is generated; and execute a second CSMA/CA instance associated with one of the secondary channels 102, 103, 104 to gain access to the secondary channel 102, 103, 104, wherein a second back-off is generated.

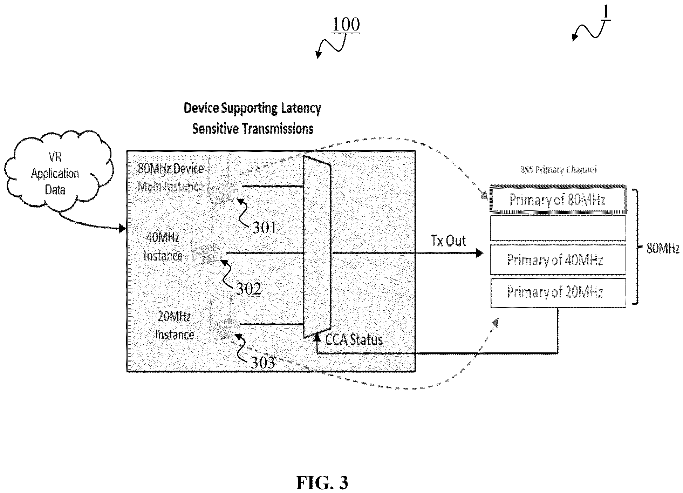

Reference is made to FIG. 3 which is another exemplary schematic view of the device 100 supporting latency sensitive transmission, according to an embodiment of the present invention.

The device 100 may support latency-sensitive transmission. For example, the device 100 may operate in terms of channel access as a combination multiple devices 301, 302, 303, and may allow more efficient operation within the BW defined by the single primary channel.

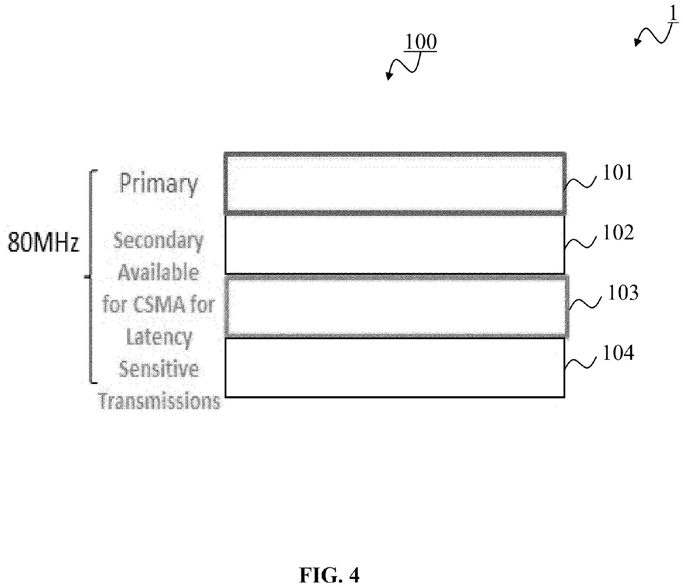

Reference is made to FIG. 4 which is schematic view of the single primary channel 101 having a first predefined bandwidth 80 MHz and the plurality of secondary channels 102, 103, 104 having a second predefined bandwidth within the first predefined bandwidth 80 MHz.

In the embodiment of FIG. 4, one (a single) primary channel 101 is maintained (e.g., by the device 100 for the wireless network 1) for transmitting control information and/or management information.

Moreover, the solution may be kept transparent to other devices (e.g., not latency sensitive). Furthermore, the plurality of secondary channels 102, 103, 104 may be used for parallel CSMA mechanism which may be defined by the AP 120 (not shown in FIG. 4) and may further be indicated in advance. The parallel CSMA/CA instances may have two main rules as follow:
- Each instance has its own primary channel (in terms of CSMA/CA only).
- Each instance has a different maximum BW.

For example, the device 100 may execute the parallel CSMA/CA instances considering the above mentioned two main rules.

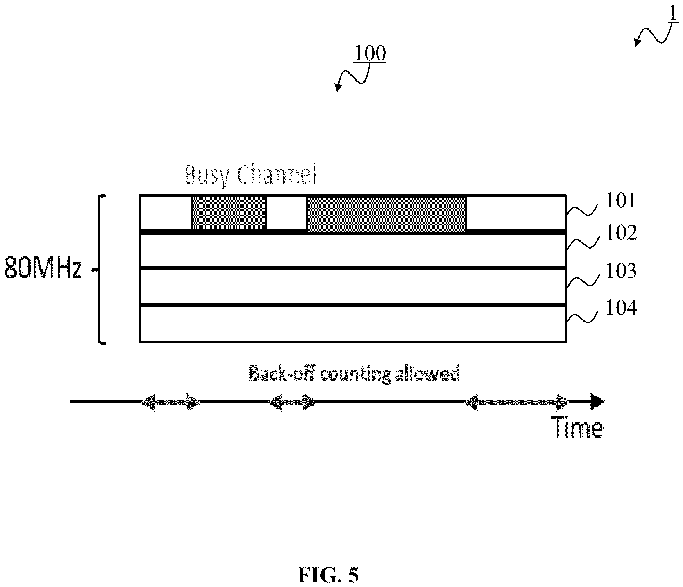

Reference is made to FIG. 5 which is a schematic view of back-off counting rules.

The back-off rules counting may be performed, for example, by the device 100.

As discussed, in some embodiments there may be multiple CSMA/CA instances. Moreover, the number of CSMA/CA instances and the exact BW of each instance should be defined within each wireless network 1 and may further be announced by the access point 120.

In addition, all of the devices (e.g., device 100, device 110, etc.) that support the suggested method should manage multiple CSMA/CA instances based on the following rules:
- A single Primary channel 101 is managed for all the communication besides latency sensitive transmissions, based on the regular CSMA/CA rules.
- Device 100 generates multiple and independent back-offs for all the channels (CSMA/CA instances) defined for a new technique (a determined back-off for each determined channel).
- Back-off on a secondary channel 102, 103, 104 is decreased, when the secondary channel 102, 103, 104 is free and the primary channel 101 is busy.
- When any back-off reaches zero, the device 100 can sense the specific channel and transmit on the available BW defined for that specific channel.

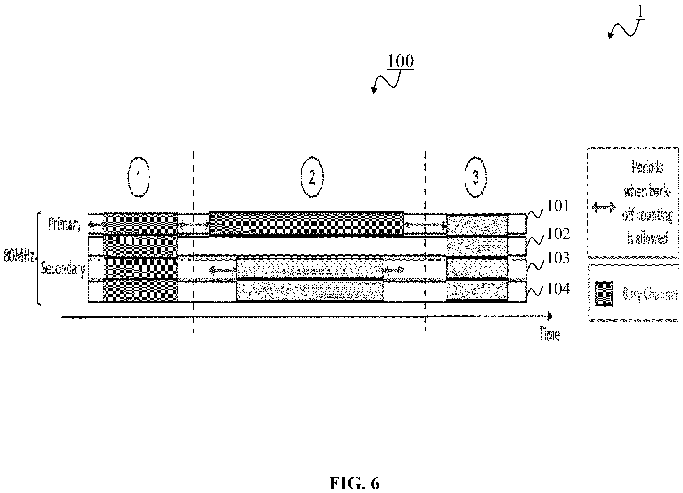

Reference is made to FIG. 6 which is a schematic view of executing two CSMA/CA instances by the device 100, when having three different phases of operation.

In FIG. 6, it is assumed that there are two CSMA/CA instances when having three different phases including phase (1), phase (2), and phase (3), while during all the phases the device 100 applies the rules defined above.
- Phase (1): all of the channels are occupied, back-off is paused on both primary channel 101 and the plurality of secondary channel 102, 103, 104.
- Phase (2): the primary 101 channel is occupied by the Overlapping Basic Service Se (OBSS) transmitting (e.g., the preamble was detected) in 11ax format, the secondary channel is idle. The OBSS's preamble is detected, and when the back-off on a determined secondary channel 102, 103, 104 reaches to zero, the latency sensitive data is transmitted.
- Phase (3): all the channels are idle, the transmission is initialized while back-off on the primary channel 101 reaches to zero (i.e., back-off on the plurality of secondary channels 102, 103, 104 are paused).

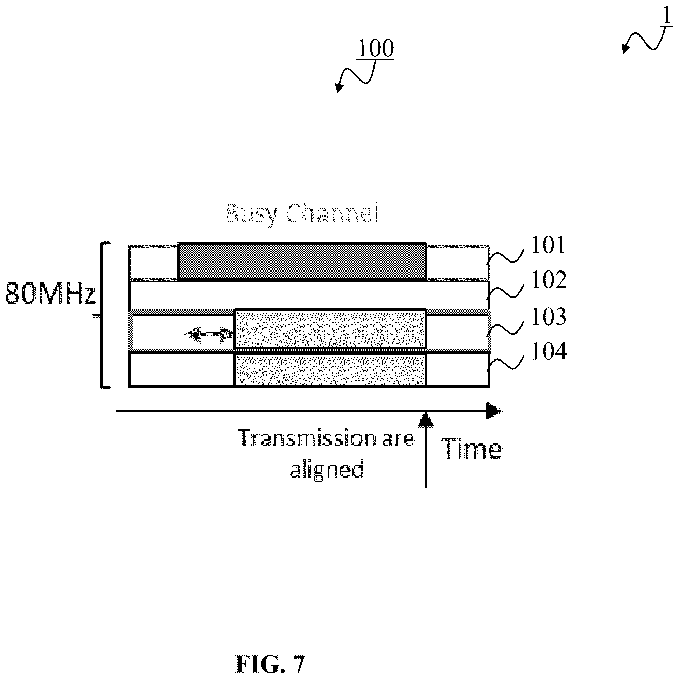

Reference is made to FIG. 7 which is a schematic view of adjusting the duration time. For example, the device 100 may adjust the duration time.

In order to make sure that (e.g., the device 100 and/or the method performed by the device 100) efficiently reduce the latency, but do not change behavior of the wireless network for devices that do not support the performed method, herein a number of application rules are added.

For example, a duration of transmission may be limited on the plurality of secondary channels 102, 103, 104. For example, it may be assumed that the primary channel 101 is occupied by the neighbor network (OBSS), thus, no transmissions within our BSS (related to the device 100) will be initialized during the occupied period.

Thus, in order to prevent any undesired issue, the duration of the transmission may be restricted (e.g., adjusted) on the secondary channel to be less than or equal to the duration of the OBSS signal on the primary channel 101. This implies that the devices that support this method may successfully detect a preamble of the OBSS signal.

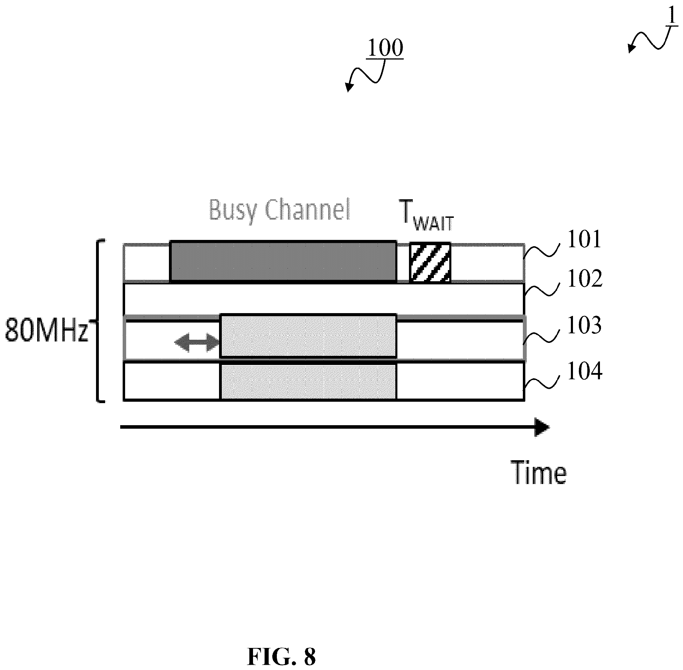

Reference is made to FIG. 8 which is a schematic view of applying a waiting period after transmission on the secondary channel. For example, the device 100 may apply the waiting period.

Generally, hidden nodes are a common problem in the WiFi networks. It causes a scenario where different devices face different status of the channel. For instance, some devices may see no signal on the primary channel 101 and may try to transmit during the period of the OBSS signal. Moreover, any device that is transmitting during this period on a secondary channel 102, 103, 104 cannot be aware of what happened on the primary channel 101. Thus, when the transmission on a determined secondary channel 102, 103, 104 is finished, a special waiting period may be defied, e.g., before any action on the primary channel 101 can be taken. The waiting period may be relevant only for those devices that were operating on the secondary channel 102, 103, 101 during the OBSS transmission. In FIG. 8, ay exemplarily waiting period is denoted period as T_{WAIT}.

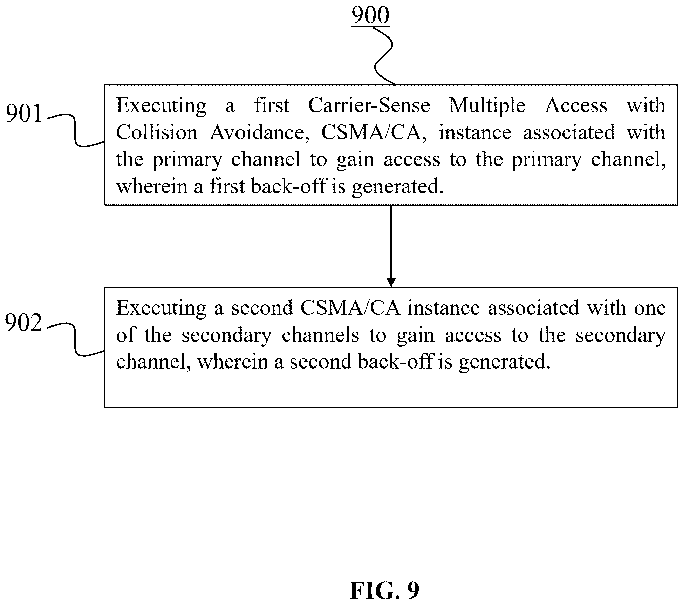

FIG. 9 shows a method 900 performed by the device 100 for a wireless network 1 comprising a single primary channel 101 having a first predefined bandwidth BW-101 configured as a common channel of operation for one or more devices 100, 110 associated with a specific access point 120, and a plurality of secondary channels 102, 103, 104 having a second predefined bandwidth within the first predefined bandwidth BW-101, according to an embodiment of the invention. The method 900 may be carried out by the device 100, as it described above.

The method 900 comprises a step 901 of executing a first Carrier-Sense Multiple Access with Collision Avoidance, CSMA/CA, instance associated with the primary channel 101 to gain access to the primary channel 101, wherein a first back-off is generated

The method 900 further comprises a step 902 of executing a second CSMA/CA instance associated with one of the secondary channels 102, 103, 104 to gain access to the secondary channel 102, 103, 104, wherein a second back-off is generated

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Further embodiments of the present invention are provided in the following. It should be noted that the numbering used in the following section does not necessarily need to comply with the numbering used in the previous sections.

Embodiment 1. A device (100) for a wireless network (1) comprising a single primary channel (101) having a first predefined bandwidth (BW-101) configured as a common channel of operation for one or more devices (100, 110) associated with a specific access point (120), and a plurality of secondary channels (102, 103, 104) having a second predefined bandwidth within the first predefined bandwidth (BW-101), wherein the device (100) is configured to:
execute a first Carrier-Sense Multiple Access with Collision Avoidance, CSMA/CA, instance associated with the primary channel (101) to gain access to the primary channel (101), wherein a first back-off is generated; and
execute a second CSMA/CA instance associated with one of the secondary channels (102, 103, 104) to gain access to the secondary channel (102, 103, 104), wherein a second back-off is generated.

Embodiment 2. Device (100) according to embodiment 1, further configured to execute a plurality of second CSMA/CA instances, each CSMA/CA instance being associated with a different secondary channel (102, 103, 104) and a different maximum bandwidth.

Embodiment 3. The device (100) according to embodiment 1 or 2, wherein the second back-off is decreased only when the secondary channel (102, 103, 104) is free and the primary channel (101) is occupied by another device.

Embodiment 4. Device (100) according to one of the embodiments 1 to 3, further configured to if any back-off reaches zero, transmit data on the bandwidth defined for a determined channel, for which the back-off was generated. Embodiment 5. Device (100) according to one of the embodiments 1 to 4, further configured to if the primary channel (101) is occupied by the other device (110) and the second back-off reaches zero, transmit data on the secondary channel (102, 103, 104).

Embodiment 6. Device (100) according to one of the embodiments 1 to 5, further configured to, if the primary channel (101) become IDLE, refrain execution of at least one operation being currently performed.

Embodiment 7. Device (100) according to one of the embodiments 1 to 6, further configured to if the primary channel (101) is occupied by another device being associated with another access point, determine the duration of a transmission by the other device on the primary channel (101).

Embodiment 8. Device (100) according to one of the embodiment 7, further configured to adjust total duration of all transmissions on the secondary channel (102, 103, 104) to be shorter than or equal to the duration of the transmission by the other device on the primary channel (101).

Embodiment 9. Device (100) according to one of the embodiments 1 to 8, further configured to when ending a transmission on the secondary channel (102, 103, 104), wait for a determined time interval, before accessing the primary channel (101).

Embodiment 10. Device (100) according to one of the embodiments 1 to 9, further configured to if a duration of a transmission by the other device on the primary channel (101) is smaller than a predefined threshold, do not resolve back-off counting for the secondary channel (102, 103, 104).

Embodiment 11. Device (100) according to one of the embodiments 1 to 10, further configured to include a Network Allocation Vector, NAV, value to a data packet transmitted on the secondary channel (102, 103, 104), wherein the NAV value is smaller than or equal to duration of a single data packet.

Embodiment 12. Device (100) according to one of the embodiments 1 to 11, further configured to transmit control information and/or management information, using only the primary channel (101).

Embodiment 13. A system (200) comprising; a first device (100) according to one of the embodiments 1 to 12; and a second device (100) according to one of the embodiments 1 to 12.

Embodiment 14. A method (900) performed by a device (100) for a wireless network (1) comprising a single primary channel (101) having a first predefined bandwidth (BW-101) configured as a common channel of operation for one or more devices (100, 110) associated with a specific access point (120), and a plurality of secondary channels (102, 103, 104) having a second predefined bandwidth within the first predefined bandwidth (BW-101), wherein the method (900) comprises:
executing a first Carrier-Sense Multiple Access with Collision Avoidance, CSMA/CA, instance associated with the primary channel (101) to gain access to the primary channel (101), wherein a first back-off is generated; and
executing a second CSMA/CA instance associated with one of the secondary channels (102, 103, 104) to gain access to the secondary channel (102, 103, 104), wherein a second back-off is generated.

## Claims

1. A device (100) for a wireless network (1) comprising a single primary channel (101) having a first predefined bandwidth (BW-101) configured as a common channel of operation for one or more devices (100, 110) associated with a specific access point (120), and a plurality of secondary channels (102, 103, 104) having a second predefined bandwidth within the first predefined bandwidth (BW-101), wherein the device (100) is configured to:
execute a first Carrier-Sense Multiple Access with Collision Avoidance, CSMA/CA, instance associated with the primary channel (101) to gain access to the primary channel (101), wherein a first back-off is generated; and
execute a plurality of second CSMA/CA instances, each CSMA/CA instance being associated with a different secondary channel (102, 103, 104) and a different maximum bandwidth to gain access to the different secondary channels (102, 103, 104), wherein a second back-off is generated.

2. The device (100) according to claim 1, wherein the second back-off is decreased only when the secondary channel (102, 103, 104) is free and the primary channel (101) is occupied by another device.

3. Device (100) according to one of the claims 1 or 2, further configured to
if any back-off reaches zero, transmit data on the bandwidth defined for a determined channel, for which the back-off was generated.

4. Device (100) according to one of the claims 1 to 3, further configured to
if the primary channel (101) is occupied by the other device (110) and the second back-off reaches zero, transmit data on the secondary channel (102, 103, 104).

5. Device (100) according to one of the previous claims, further configured to, if the primary channel (101) become IDLE,
refrain execution of at least one operation being currently performed.

6. Device (100) according to one of the previous claims, further configured to
if the primary channel (101) is occupied by another device being associated with another access point, determine the duration of a transmission by the other device on the primary channel (101).

7. Device (100) according to one of the previous claims 6, further configured to
adjust total duration of all transmissions on the secondary channel (102, 103, 104) to be shorter than or equal to the duration of the transmission by the other device on the primary channel (101).

8. Device (100) according to one of the previous claims, further configured to
when ending a transmission on the secondary channel (102, 103, 104), wait for a determined time interval, before accessing the primary channel (101).

9. Device (100) according to one of the previous claims, further configured to
if a duration of a transmission by the other device on the primary channel (101) is smaller than a predefined threshold, do not resolve back-off counting for the secondary channel (102, 103, 104).

10. Device (100) according to one of the previous claims , further configured to
include a Network Allocation Vector, NAV, value to a data packet transmitted on the secondary channel (102, 103, 104), wherein the NAV value is smaller than or equal to duration of a single data packet.

11. Device (100) according to one of the previous claims , further configured to
transmit control information and/or management information, using only the primary channel (101).

12. A system (200) comprising;
a first device (100) according to one of the claims 1 to 11; and
a second device (100) according to one of the claims 1 to 11.

13. A method (900) performed by a device (100) for a wireless network (1) comprising a single primary channel (101) having a first predefined bandwidth (BW-101) configured as a common channel of operation for one or more devices (100, 110) associated with a specific access point (120), and a plurality of secondary channels (102, 103, 104) having a second predefined bandwidth within the first predefined bandwidth (BW-101), wherein the method (900) comprises:
executing a first Carrier-Sense Multiple Access with Collision Avoidance, CSMA/CA, instance associated with the primary channel (101) to gain access to the primary channel (101), wherein a first back-off is generated; and
execute a plurality of second CSMA/CA instances, each CSMA/CA instance being associated with a different secondary channel (102, 103, 104) and a different maximum bandwidth to gain access to the different secondary channels (102, 103, 104), wherein a second back-off is generated.
